# EUROPÄISCHE PATENTSCHRIFT

(11) **EP 2 809 536 B1**
(45) Veröffentlichungstag und Bekanntmachung des Hinweises auf die Patenterteilung: **10.08.2016**
(21) Anmeldenummer: 13701010.4
(22) Anmeldetag: 17.01.2013
(51) Int. Cl.: B60K 1/00, B60K 17/30

(54) **ELEKTRISCHER ANTRIEBSSTRANG FÜR DIE LENKBARE ACHSE EINES KRAFTFAHRZEUGS**
ELECTRICAL POWER TRAIN FOR THE STEERABLE AXLE OF A MOTOR VEHICLE
CHAÎNE CINÉMATIQUE ÉLECTRIQUE POUR L'ESSIEU ORIENTABLE D'UN VÉHICULE AUTOMOBILE

(30) Priorität: 02.02.2012 DE 102012201577
(43) Veröffentlichungstag der Anmeldung: 10.12.2014
(73) Patentinhaber: Schaeffler Technologies AG & Co. KG, 91074 Herzogenaurach (DE)
(72) Erfinder: FISCHER, Raphael, 91074 Herzogenaurach (DE); SCHUBERT, Thorsten, 91074 Herzogenaurach (DE); MEHLIS, Thomas, 91077 Kleinsendelbach (DE); WITT, Christian, 91487 Vestenbergsgreuth (DE)
(86) Internationale Anmeldenummer: PCT/EP2013/050767
(87) Internationale Veröffentlichungsnummer: WO 2013/113561

(56) Entgegenhaltungen:
- EP-A1- 0 224 144
- DE-A1- 3 725 620
- DE-C1- 4 421 425
- US-A- 1 651 153
- US-A1- 2007 251 748

## Beschreibung

Die Erfindung betrifft einen Antriebsstrang für ein Kraftfahrzeug mit den Merkmalen gemäß Oberbegriff des Patentanspruchs 1. Derartige Antriebsstränge werden bei Fahrzeugen mit Front- oder Allradantrieb eingesetzt, bei denen die lenkbare Achse auch ein Drehmoment zum Antrieb des Fahrzeugs auf die mit der Achse verbundenen Räder überträgt.

Beispielsweise aus DE 3507435 A1 ist ein Antriebsstrang mit den Merkmalen des Oberbegriffs des Anspruchs 1 bekannt mit einer Antriebswelle, die ein äußeres Gleichlaufgelenk innerhalb einer Radanordnung mit einem inneren Gleichlaufgelenk innerhalb eines Differenzialgehäuses verbindet. Die beiden Gelenke sind notwendig, um ein Einschlagen des mit der Antriebswelle verbundenen Rades zu ermöglichen. Beim Einschlagen knickt die Welle an ihren beiden Gelenken ein. Die hierbei entstehende Längenänderung der Antriebswelle wird durch ein Gelenklager mit Schiebesitz ausgeglichen.

Der Einschlagwinkel der Gelenkwelle ist durch den maximalen Knickwinkel des radseitigen Gelenks und die Länge des Gelenkwellenschafts zwischen getriebe- und radseitigem Gelenk begrenzt. Dies hat zur Folge, dass der maximale Lenkwinkel bei Fahrzeugen mit Frontantrieb im Allgemeinen geringer ist als bei Fahrzeugen mit Heckantrieb, bei denen die lenkbare Achse nicht angetrieben ist.

Im Zuge der Verknappung fossiler Brennstoffe werden vermehrt elektrische und hybride Antriebskonzepte vorgeschlagen, bei denen zumindest eine Achse eines Kraftfahrzeugs durch einen Elektromotor angetrieben wird. So ist aus der DE 10 2010 024 191 A1 ein Antriebssystem für ein Kraftfahrzeug bekannt mit einem elektrischen Antriebsstrang, der ein Getriebe umfasst, das mit einer ersten und einer zweiten Achse in einem Wirkzusammenhang steht. Der elektrische Antriebsstrang umfasst eine Vielzahl von individuell steuerbaren Elektromotoren, die ein Drehmoment über das Getriebe und über Vor- und Hinterachsdifferenziale auf die Achsen des Fahrzeugs übertragen.

Der Erfindung liegt die Aufgabe zugrunde, den Wendekreis eines Fahrzeuges mit angetriebener, lenkbarer Achse zu verkleinern.

Dieser Aufgabe wird durch einen Antriebsstrang mit den Merkmalen des Patentanspruchs 1 gelöst. Dieser umfasst
▪ eine linke, mit einem linken lenkbaren Rad antriebsfest verbundene Antriebswelle,
▪ eine rechte, mit einem rechten lenkbaren Rad antriebsfest verbundene Antriebswelle und
▪ eine zwischen den Antriebswellen angeordnete Antriebseinheit zum Antrieb der Antriebswellen,
wobei die Antriebswellen als Gelenkwellen mit jeweils einem radnahen Gelenk und einem radfernen Gelenk ausgebildet sind und wobei besagte Gelenke jeweils mindestens eine bei allen Gelenken gleichorientierte Drehachse aufweisen, wobei die Antriebseinheit dazu ausgebildet ist, ein elektromotorisch erzeugtes Drehmoment auf die Antriebswellen zu übertragen und eine Karosserieaufhängung aufweist, die eine Drehung der Antriebseinheit bezüglich der Karosserie um eine zu den gleichorientierten Drehachsen parallele Schwenkachse erlaubt.

Vorteilhafte Ausführungsformen der Erfindung sind den abhängigen Patentansprüchen zu entnehmen.

Der Erfindung liegt die Erkenntnis zugrunde, dass bei einem vorgegebenen maximalen Knickwinkel des radnahen Gelenkes um die Drehachse, die im wesentlichen orthogonal zur Fahrzeuglängs- und Fahrzeugquerrichtung orientiert ist, ein größerer Einschlagwinkel des Rades erzielt werden kann, wenn es gelingt, den radfernen Knickpunkt, der durch das radferne Gelenk gebildet wird, entlang einer Kreisbahn zu verschieben. Bei einer Drehung der Räder im Uhrzeigersinn gilt es hierbei, den jeweiligen Knickpunkt des linken und rechten radfernen Gelenkes entgegen dem Uhrzeigersinn zu verschieben.

Der Erfindung liegt nun die weitere Erkenntnis zugrunde, dass eine derartige Verschiebung besagter Kickpunkte dadurch gelingt, dass die Antriebseinheit, die mit den jeweiligen den Rändern abgewandten Enden der Gelenkwellen trieblich verbunden ist, schwenkbar an der Fahrzeugkarosserie gelagert wird. Hierbei muss die Schwenkachse dieselbe Orientierung aufweisen wie die besagte Drehachse der vier angesprochenen Gelenke.

Schließlich liegt der Erfindung die darüber hinausgehende Erkenntnis zu Grunde, dass besagte schwenkbare Lagerung der Antriebseinheit erst dann mit einem nennenswerten Schwenkwinkel realisiert werden kann, wenn von herkömmlichen Antriebskonzepten basierend auf Verbrennungsmotoren zum Antrieb der lenkbaren Achse abgesehen wird. Verbrennungsmotoren müssen aufgrund der erforderlichen Genauigkeit zu weiteren Anbauteilen wie insbesondere der Abgasanlage während des Betriebes fest mit der Fahrzeugkarosserie verbunden werden. Lediglich die zur Schwingungsdämpfung notwendigen Bewegungen werden in möglichst engem Rahmen durch Gummilager freigegeben. Aufgrund der vibrationsoptimierten Motoraufhängung und den genannten Einschränkungen kann ein Verbrennungsmotor mithin nicht wesentlich in seiner Aufhängung geschwenkt werden.

Hingegen ist eine drehbare Lagerung eines Elektromotors unproblematisch. Hierbei müssen lediglich die elektrischen Anschlüsse derart gestaltet sein, das eine Schwenkbewegung ermöglicht wird. Ferner sind Anschlussleitungen an einen Kühlkreislauf hinreichend flexibel zu gestalten.

Durch die Vergrößerung des Knickwinkels mittels Verdrehung der Antriebseinheit wird somit ein größerer Radeinschlag ohne bauliche Veränderung der Antriebswelle ermöglicht. Die Aktuierung der Antriebseinheit während des Lenkens kann hierbei elektromechanisch unterstützt oder mittels einer geeigneten Kinematik rein mechanisch erfolgen. Eine aus der Verschwenkung der Antriebseinheit resultierende Längenänderung der linken und rechten Antriebswelle kann durch einen in der jeweiligen Antriebswelle, insbesondere im radfernen Gelenk, angeordneten Schiebesitz ausgeglichen werden.

Ein radselektiver Antrieb kann in vorteilhafter Ausgestaltung der Erfindung dadurch erzielt werden, dass die Antriebseinheit eine erste elektrische Maschine zum Antrieb der linken Antriebswelle und eine zweite elektrische Maschine zum Antrieb der rechten Antriebswelle umfasst. Dadurch, dass beide Antriebsräder getrennt und unabhängig voneinander angetrieben werden können, können die Fahrsicherheit und die Fahrdynamik deutlich gesteigert werden. Insbesondere kann ein Torquevectoring realisiert werden, bei dem in bestimmten Fahrsituationen durch ungleiche Drehmomentverteilung an den Antriebsrädern eine zusätzlich Gierwinkelbeschleunigung erzeugt wird.

Aufgrund des in einem weiten Drehzahlbereich verfügbaren hohen Drehmomentes von Elektromotoren kann die Antriebseinheit als Direktantrieb ausgebildet werden. D.h., es kann vollständig auf ein Getriebe verzichtet werden. Durch den radselektiven Antrieb o.g. Ausführungsform entfällt ferner die Notwendigkeit eines Achsdifferenzials.

Eine bauraumsparende Ausbildung der Erfindung ist ferner dadurch gekennzeichnet, dass die erste und zweite elektrische Maschine Rotorwellen aufweisen, die bei Geradeausfahrt des Fahrzeugs koaxial zu den Antriebswellen gerichtet sind. Auf eine Geradeausfahrt wird in diesem Zusammenhang abgestellt, da in diesem Betriebszustand die Knickwinkel der Gelenke 0° betragen, so dass von genau einer Rotationsachse der Anstiebswelle gesprochen werden kann.

Eine solche Ausgestaltung der erfindungsgemäßen Antriebseinheit kann als Direktantrieb oder auch mit Übersetzungsgetriebe realisiert werden. Beispielsweise kann für jede der elektrischen Maschinen vorteilhaft eine Untersetzung insbesondere mittels eines Planetengetriebes in die Antriebseinheit integriert sein, um schnelldrehende und demnach bauraumsparende elektrische Maschinen verwenden zu können.

Eine weitere Variante ist in vorteilhafter Weiterbildung der Erfindung dadurch gekennzeichnet, dass die Antriebseinheit
- ein erstes Verbindungsgetriebe zur trieblichen Verbindung einer ersten Rotorwelle der ersten elektrischen Maschine mit der linken Antriebswelle und
- ein zweites Verbindungsgetriebe zur trieblichen Verbindung einer zweiten Rotorwelle der zweiten elektrischen Maschine mit der rechten Antriebswelle
aufweist, wobei das erste und das zweite Verbindungsgetriebe in einem gemeinsamen Gehäuse angeordnet sind und die erste elektrische Maschine an der dem linken Rad zugewandten Seite an das Gehäuse angebracht ist und die zweite elektrische Maschine an der dem rechten Rad zugewandten Seite an das Gehäuse angebracht ist.

Hierbei befindet sich das gemeinsame Gehäuse der beiden insbesondere als Stirnradgetriebe ausgebildeten Verbindungsgetriebe zentral zwischen den beiden Elektromotoren. Die Rotorwellen der beiden Elektromotoren können bei Geradeausfahrt des Fahrzeugs parallel zu den beiden Antriebswellen orientiert sein aber in Fahrtrichtung betrachtet nach vorne oder hinten zu diesen versetzt angeordnet sein. Auf diese Weise lässt sich der benötigte Bauraum im Vergleich zu einer rein koaxialen Anordnung etwas flexibler auf das Fahrgestell verteilen.

Der erfindungsgemäße Antriebsstrang lässt sich in weiterer vorteilhafter Ausgestaltung aber auch mit nur einer elektrischen Antriebsmaschine realisieren, wobei die Antriebseinheit eine zentrale elektrische Maschine mit einer Rotorwelle zum Antrieb beider Antriebswellen und ein Differenzial aufweist. Durch das Differenzial werden ungleiche Raddrehzahlen auf der linken und rechten Seite bei Kurvenfahrten ermöglicht. Durch den Ausdruck "zentral" soll in diesem Zusammenhang lediglich zum Ausdruck gebracht werden, dass beide Antriebsräder von einer Maschine gemeinsam angetrieben werden, mithin kein radselektiver Antrieb vorliegt. Die Lage der zentralen elektrischen Maschine ist je nach konstruktiven Vorgaben des Fahrzeugs, in die der Antriebsstrang zu integrieren ist, wählbar.

So ist eine vorteilhafte Weiterbildung der Erfindung denkbar, bei der die Rotorwelle der zentralen elektrischen Maschine bei Geradeausfahrt des Fahrzeugs koaxial zu den Antriebswellen gerichtet ist.

Aber auch bei Verwendung nur einer Traktionsmaschine kann alternativ ein in Fahrzeuglängsrichtung ausgerichteter Antriebsstrang realisiert werden, wobei die Rotorwelle bei Geradeausfahrt in Fahrtrichtung orientiert ist und die zentrale elektrische Maschine in Fahrtrichtung betrachtet vor oder hinter dem Differenzial angeordnet ist, welches zwischen der linken und rechten Antriebswelle angeordnet ist. Bei einer Kurvenfahrt schwenkt die Rotorwelle zusammen mit der Antriebseinheit um die Schwenkachse.

Auch bei Ausgestaltungsformen mit einer zentralen elektrischen Maschine kann vorteilhafterweise neben dem Differenzial noch ein Getriebe zur Untersetzung der Drehzahl vorgesehene werden. Vorteilhafterweise kann hierbei, ebenso wie bei Ausführungsformen mit radselektivem Antrieb, auch ein schaltbares mehrstufiges Getriebe in den Antriebsstrang integriert werden.

Ein Kraftfahrzeug mit einer Antriebseinheit nach einer der zuvor beschrieben Ausführungsformen zeichnet sich durch sein elektrisches Antriebskonzept ggü. rein verbrennungsmotorisch basierten Konzepten nicht nur durch ein höheres ökologische Potenzial sondern auch durch einen kleineren Wendekreis aus. Letzteres gilt natürlich nur bei einem Vergleich von Fahrzeugen, deren lenkbare Achse auch eine angetriebene Achse ist.

Der Vorteil eines kleineren Wendekreises kann auch bei einem hybriden Antriebskonzept, d.h. bei einem Kraftfahrzeug gemäß o.g. Ausgestaltung mit einem zusätzlichen Verbrennungsmotor erhalten bleiben, wenn der Verbrennungsmotor zum Antrieb der nicht gelenkten Achse dient. Auf diese Weise erhält man ein Allradfahrzeug, welches aufgrund des zusätzlichen Verbrennungsmotors über eine erhöhte Reichweite verfügt und im Vergleich zu herkömmlichen Fahrzeugen mit Front- oder Allradantrieb einen geringeren Wendekreis aufweist. Auch ist bei einem solchen hybriden Konzept denkbar und von der Erfindung umfasst, die Antriebseinheit mit einer schalbaren Kupplung zu versehen und somit den elektrischen Antrieb zu- und abschaltbar zu gestalten.

Im folgenden wird die Erfindung anhand der in den Figuren dargestellten Ausführungsbeispiele näher beschrieben und erläutert.

Es zeigen:
- FIG 1: eine schematische Darstellung eines maximal möglichen Radeinschlages bei einer Ausführungsform der Erfindung im Vergleich zu einer Ausführung gemäß dem Stand der Technik,
- FIG 2: einen Antriebsstrang mit radselektivem Antrieb gemäß einer ersten Ausführungsform der Erfindung,
- FIG 3: einen Antriebsstrang mit zentralem Antrieb gemäß einer zweiten Ausführungsform der Erfindung,
- FIG 4: einen Antriebsstrang mit zentralem Antrieb gemäß einer dritten Ausführungsform der Erfindung und
- FIG 5: einen Antriebsstrang mit radselektivem Antrieb gemäß einer vierten Ausführungsform der Erfindung.

Für gleiche oder gleich wirkende Elemente der Erfindung werden identische Bezugszeichen verwendet.

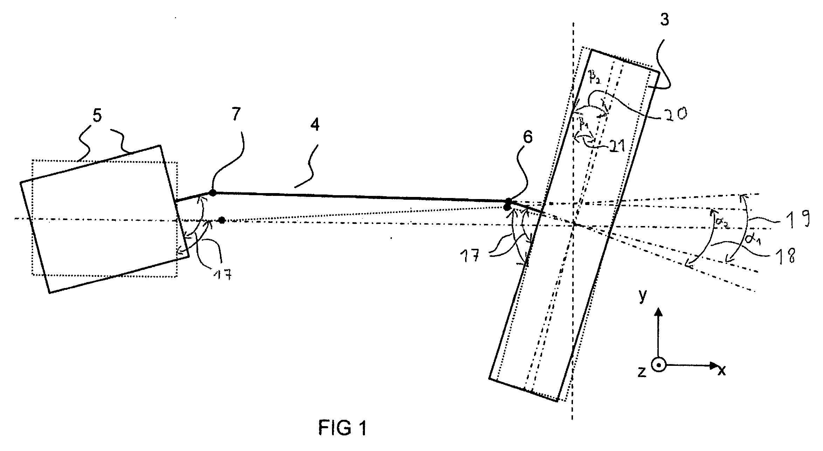

FIG 1 zeigt eine schematische Darstellung eines maximal möglichen Radeinschlages bei einer Ausführungsform der Erfindung im Vergleich zu einer Ausführung gemäß dem Stand der Technik. Dargestellt ist ein Antriebseinheit 5 des Antriebsstrangs, eine rechte Antriebswelle 4 und ein rechtes, lenkbares Rad 3. Auf eine Darstellung der linken Antriebsseite mit einer erst in den folgenden Figuren dargestellten linken Antriebswelle 2 und einem von dieser angetriebenen linken Rad 1 wurde in FIG 1 bewusst aus Gründen der Übersichtlichkeit verzichtet.

Die rechte Antriebswelle 4 besitzt, wie auch die linke, ein radnahes Gelenk 6 und ein radfernes Gelenk 7. Die beiden Gelenke 6,7 lassen zumindest eine bezüglich des Knickwinkels begrenzte Drehbewegung der angrenzenden Teilwellen um die z-Achse zu. Weitere mögliche rotatorische Freiheitsgrade sind zum Verständnis der Erfindung unbeachtlich und werden demnach hier nicht weiter vertieft.

Bei einem Einschlagen des Rades 3 erfährt die Antriebswelle 4 jedoch auch eine Längenänderung, so dass ein Schiebesitz vorzusehen ist. Dieser kann beispielsweise im radfernen Gelenk 7 verwirklicht sein.

FIG 1 veranschaulicht den der Erfindung zugrunde liegenden Gedanken, den maximal möglichen Einschlagwinkel des Rades 3 durch eine Verschiebung des Knickpunktes, der vom radfernen Gelenk 7 gebildet wird, entgegen der Einschlagrichtung des Rades 3 zu vergrößern. Um dies zu Verwirklichen, wird die Antriebseinheit um eine Schwenkachse drehbar gelagert, die ebenfalls in z-Richtung orientiert ist und somit parallel zu den Drehachsen der Gelenke 6,7 liegt.

Zum besseren Verständnis ist neben einer mit durchgezogenen Linien dargestellten Ausführungsform der Erfindung gepunktet eine Ausführung mit gleichen Komponenten jedoch ohne die erfindungsgemäße Schwenkbarkeit der Antriebseinheit 5 dargestellt.

Die der Antriebseinheit 5 zugewandten Teilwellen der Antriebswelle 4 bilden mit der Antriebseinheit stets einen rechten Winkel 17. Dies gilt gleichermaßen für die dem Rad 3 zugewandten Teilwellen der Antriebswelle 4 in Bezug zur Längsachse des Rades 3.

Da in beiden dargestellten Ausführungsformen dieselben Gelenke 6,7 Verwendung finden, sind auch die Knickwinkel 18,19 des radnahen Gelenkes 6 für beide Anordnungen als gleich anzusehen. D.h., es gilt α₁ = α₂.

Ausschlaggebend für den Wendekreis des Fahrzeugs ist jedoch der maximale Einschlagwinkel des Rades 3 in Bezug zur Fahrzeuglängsachse. Hier ergibt sich ein erster Einschlagwinkel 20 für die Anordnung mit schwenkbarer Antriebseinheit 5, der größer ist als ein zweiter Einschlagwinkel 21, der sich ergibt, wenn die Antriebseinheit 5 wie im Stand der Technik starr zur Längsachse des Fahrzeugs gelagert ist. D.h., es gilt β₂ > β₁.

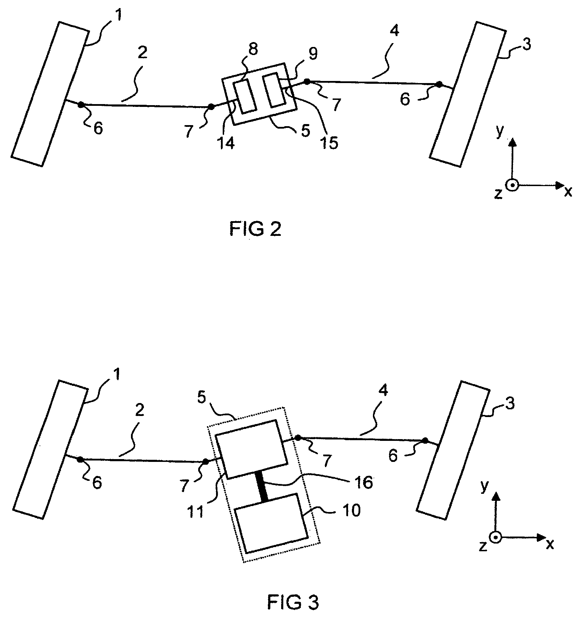

Die dargestellten Zusammenhänge gelten unabhängig von der konkreten Realisierung der Antriebseinheit 5. Die Schwenkbewegung lässt sich jedoch sinnvoll nur mit einem elektromotorischen Antrieb erzielen, da bei herkömmlichen auf Verbrennungsmotoren basierenden Antriebskonzepten eine vibrationsoptimierte Aufhängung anzustreben ist, die schwerlich in einem nennenswerten Maße schwenkbar gestaltet werden kann. Beispiele für elektrische Antriebskonzepte, die im Zusammenhang mit der Erfindung Anwendung finden können, sind in den nachfolgenden FIG 2 bis 5 angegeben.

So zeigt FIG 2 einen Antriebsstrang mit radselektivem Antrieb gemäß einer ersten Ausführungsform der Erfindung. Im Gegensatz zu FIG 1 sind hier sowohl die linke als auch die rechte Antriebswelle 2,4 und die hiermit trieblich verbundenen Räder 1,3 dargestellt.

Die Antriebseinheit 5 umfasst eine erste und eine zweite elektrische Maschine 8,9. Die erste elektrische Maschine 8 umfasst eine erste Rotorwelle 14, die trieblich mit der linken Antriebswelle 2 gekoppelt ist. Die zweite elektrische Maschine 9 umfasst eine zweite Rotorwelle 15, die trieblich mit der rechten Antriebswelle 4 gekoppelt ist. Zwischen den beiden elektrischen Maschinen 8,9 besteht keine mechanische Kopplung. Sie sind lediglich in einem gemeinsamen Gehäuse angeordnet, welches zwischen der linken und der rechten Antriebswelle 2,4 sitzt. Es handelt sich um eine koaxiale Anordnung. Dies bedeutet, dass die beiden Rotorwellen 14,15 bei einer Geradeausfahrt des Fahrzeugs, bei der die Antriebswellen 2,4 an keiner ihrer Gelenke 6,7 geknickt sind, zusammen mit den Antriebswellen 2,4 in einer gemeinsamen Achse liegen.

Mit der hier dargestellten Anordnung ist ein radselektiver Antrieb möglich. Drehzahl und Drehmoment der linken Antriebsseite können theoretisch unabhängig von der Drehzahl und dem Drehmoment auf der rechten Antriebsseite geregelt werden. Ein übergeordnete Regelung übernimmt die Vorgabe geeigneter Drehmomentsollwerte für die linke und rechte elektrische Maschine 8,9 in Abhängigkeit der aktuellen Fahrsituation und der vom Fahrer abgesetzten Steuerkommandos wie beispielsweise Gaspedalstellung und Lenkradeinschlag. In einem untergeordneten Regelkreis wird schließlich aus der Drehmomentsollwertvorgabe ein entsprechender Sollwert für einen Stromvektor für jede der beiden Maschinen 8,9 abgeleitet, der mittels eines Umrichters in die Maschinenwicklungen eingeprägt wird.

Bei dem dargestellten Antriebsstrang handelt es sich ferner um einen Direktantrieb. D.h., es wird auf ein Getriebe zur Über- oder Untersetzung der Drehzahl verzichtet wodurch Getriebeverluste entfallen. Als Maschinentyp kann hier wie auch in den weiteren gezeigten Ausführungsformen vorteilhaft eine permanenterregte oder fremderregte Synchronmaschine, eine Asynchronmaschine oder auch eine geschaltete Reluktanzmaschine zum Einsatz kommen. Aufgrund ihrer hohen Drehmomentdichte bietet sich jedoch insbesondere der Einsatz einer permanenterregten Synchronmaschine bei einer getriebelosen Konfiguration an. Außen- wie Innenläufermaschinen sind gleichermaßen denkbar. Prinzipiell eignen sich Radialflussmaschinen in gleicher Weise wie Axialflussmaschinen.

FIG 3 zeigt einen Antriebsstrang mit zentralem Antrieb gemäß einer zweiten Ausführungsform der Erfindung. Hier wird eine zentrale elektrische Maschine 10 innerhalb der Antriebseinheit 5 mit einem Differenzial 11 trieblich gekoppelt. Durch das Differenzial 11 können insbesondere bei Kurvenfahrten ungleiche Drehzahlen im linken und rechten Rad 1,3 zugelassen werden.

Eine Rotorwelle 16 der zentralen elektrischen Maschine 10 ist orthogonal zu den getriebenahen Teilwellen der Antriebswellen 2,4 ausgerichtet. Es handelt sich bei der Antriebseinheit 5 mithin um eine Längsanordnung. Diese ist wiederum zur Vergrößerung des maximal möglichen Einschlagwinkels der Räder in Bezug auf die Geradeausrichtung schwenkbar am Fahrgestell aufgehängt. Die Schwenkbarkeit ist wie der rotatorische Freiheitgrad der Gelenke 6,7 um die z-Achse gerichtet.

Neben dem Differenzial 11 kann auch ein in der Abbildung nicht dargestelltes Untersetzungsgetriebe zusätzlich in Längsrichtung beispielsweise zwischen der zentralen elektrischen Maschine 10 und dem Differenzial 11 angeordnet sein. Hierdurch kann eine hochdrehende elektrische Maschine eingesetzt werden, deren radiale Abmaße geringer sind als die einer niedrigdrehenden elektrischen Maschine gleicher Leistung.

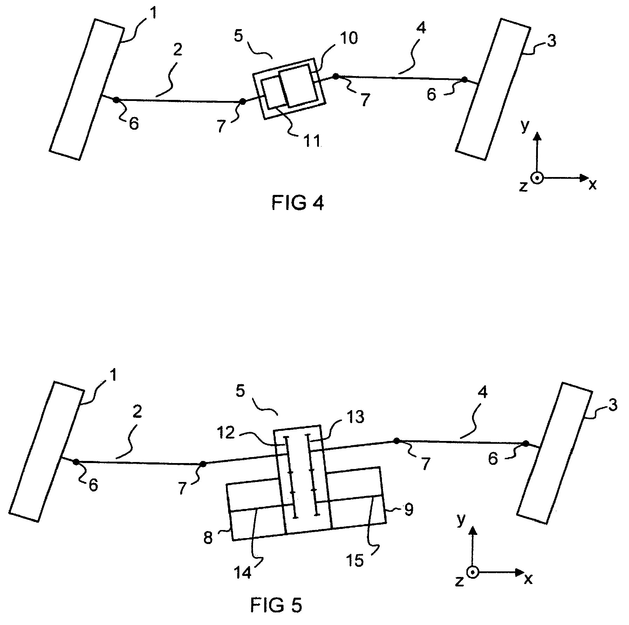

FIG 4 zeigt einen Antriebsstrang mit zentralem Antrieb gemäß einer dritten Ausführungsform der Erfindung. Auch hier ist die zentrale elektrische Maschine 10 mit dem Differenzial innerhalb der Antriebseinheit 5 trieblich gekoppelt und schwenkbar um die in Richtung der Zeichenebene orientierte z-Achse gelagert. Die Achsen der zentralen elektrischen Maschine 10 und des Differenzials 11 verlaufen jedoch ähnlich wie in der Anordnung aus FIG 2 koaxial zu den der Antriebseinheit 5 zugewandten Enden der Antriebswellen 2,4.

FIG 5 zeigt einen Antriebsstrang mit radselektivem Antrieb gemäß einer vierten Ausführungsform der Erfindung. Wie in FIG 2 sind auch hier zwei elektrische Maschinen 8,9 vorgesehen, die jeweils einem Rad 1,3 trieblich zugeordnet sind. Hier ist jedoch eine Drehzahluntersetzung von den Rotorwellen 14,15 der elektrischen Maschinen 8,9 auf die Antriebswellen 2,4 vorgesehen. Zu diesem Zweck ist zentral zwischen den beiden elektrischen Maschinen 8,9 ein Getriebegehäuse mit einem ersten und einem zweiten Verbindungsgetriebe 12,13 angeordnet. Die beiden Verbindungsgetriebe 12,13 sind als Stirnradgetriebe ausgebildet. Ein erstes dieser Verbindungsgetriebe 12 koppelt die erste elektrische Maschine 8 trieblich mit der linken Antriebswelle 2, während ein zweites sche Maschine 8 trieblich mit der linken Antriebswelle 2, während ein zweites der Verbindungsgetriebe 13 die zweite elektrische Maschine 9 mit der rechten Antriebswelle 4 trieblich verbindet. Da die elektrischen Maschinen 8,9 auf diese Weise für einen vergleichsweise hohen Drehzahlbereich ausgelegt werden können, lassen sie sich mit relative geringer Achsehöhe ausführen.

### Bezugszeichenliste

- 1: linkes Rad
- 2: linke Antriebswelle
- 3: rechtes Rad
- 4: rechte Antriebswelle
- 5: Antriebseinheit
- 6: radnahes Gelenk
- 7: radfernes Gelenk
- 8: erste elektrische Maschine
- 9: zweite elektrische Maschine
- 10: zentrale elektrische Maschine
- 11: Differenzial
- 12: erstes Verbindungsgetriebe
- 13: zweites Verbindungsgetriebe
- 14: erste Rotorwelle
- 15: zweite Rotorwelle
- 16: Rotorwelle der zentralen elektrischen Maschine
- 17: rechter Winkel
- 18: Knickwinkel des radnahen Gelenkes α₂
- 19: Knickwinkel des radnahen Gelenkes α₁
- 20: erster Einschlagwinkel β₂
- 21: zweiter Einschlagwinkel β₁

## Patentansprüche

1. Antriebseinheit für ein Fahrzeug, wobei der Antriebsstrang
▪ eine linke, mit einem linken lenkbaren Rad (1) antriebsfest verbundene Antriebswelle (2),
▪ eine rechte, mit einem rechten lenkbaren Rad (3) antriebsfest verbundene Antriebswelle (4) und
▪ eine zwischen den Antriebswellen (2,4) angeordnete Antriebseinheit (5) zum Antrieb der Antriebswellen (2,4)
aufweist, wobei die Antriebswellen (2,4) als Gelenkwellen mit jeweils einem radnahen Gelenk (6) und einem radfernen Gelenk (7) ausgebildet sind und wobei besagte Gelenke (6,7) jeweils mindestens eine bei allen Gelenken (6,7) gleichorientierte Drehachse aufweisen, **dadurch gekennzeichnet, dass** die Antriebseinheit (5) dazu ausgebildet ist, ein elektromotorisch erzeugtes Drehmoment auf die Antriebswellen (2,4) zu übertragen und eine Karosserieaufhängung aufweist, die eine Drehung der Antriebseinheit (5) bezüglich der Karosserie um eine zu den gleichorientierten Drehachsen parallele Schwenkachse erlaubt.

2. Antriebsstrang nach Anspruch 1, wobei die Antriebseinheit (5) eine erste elektrische Maschine (8) zum Antrieb der linken Antriebswelle (2) und eine zweite elektrische Maschine (9) zum Antrieb der rechten Antriebswelle (4) umfasst.

3. Antriebsstrang nach Anspruch 2, wobei die erste und zweite elektrische Maschine (8,9) Rotorwellen (14,15) aufweisen, die bei Geradeausfahrt des Fahrzeugs koaxial zu den Antriebswellen (2,4) gerichtet sind.

4. Antriebsstrang nach Anspruch 2, wobei die Antriebseinheit (5)
• ein erstes Verbindungsgetriebe (12) zur trieblichen Verbindung einer ersten Rotorwelle (14) der ersten elektrischen Maschine (8) mit der linken Antriebswelle (2) und
• ein zweites Verbindungsgetriebe (13) zur trieblichen Verbindung einer zweiten Rotorwelle (15) der zweiten elektrischen Maschine (9) mit der rechten Antriebswelle (4)
aufweist, wobei das erste und das zweite Verbindungsgetriebe (12,13) in einem gemeinsamen Gehäuse angeordnet sind und die erste elektrische Maschine (8) an der dem linken Rad (1) zugewandten Seite an das Gehäuse angebracht ist und die zweite elektrische Maschine (9) an der dem rechten Rad (3) zugewandten Seite an das Gehäuse angebracht ist.

5. Antriebsstrang nach Anspruch 1, wobei die Antriebseinheit (5) eine zentrale elektrische Maschine (10) mit einer Rotorwelle (16) zum Antrieb beider Antriebswellen (2,4) und ein Differenzial (11) aufweist.

6. Antriebsstrang nach Anspruch 5, wobei die Rotorwelle (16) der zentralen elektrischen Maschine (10) bei Geradeausfahrt des Fahrzeugs koaxial zu den Antriebswellen (2,4) gerichtet ist.

7. Antriebsstrang nach Anspruch 5, wobei die Rotorwelle (16) bei Geradeausfahrt in Fahrtrichtung orientiert ist und die zentrale elektrische Maschine (10) in Fahrtrichtung betrachtet vor oder hinter dem Differenzial (11) angeordnet ist, welches zwischen der linken und rechten Antriebswelle (2,4) angeordnet ist.

8. Kraftfahrzeug mit einem Antriebsstrang nach einer der Ansprüche 1 bis 7.

9. Kraftfahrzeug nach Anspruch 8 mit einem Verbrennungsmotor zum Antrieb der nicht gelenkten Achse.

## Claims

1. Drive unit for a vehicle, the drive train having
• a left-hand drive shaft (2) which is connected fixedly in drive terms to a left-hand steerable wheel (1),
• a right-hand drive shaft (4) which is connected fixedly in drive terms to a right-hand steerable wheel (3), and
• a drive unit (5) which is arranged between the drive shafts (2, 4) for driving the drive shafts (2, 4),
the drive shafts (2, 4) being configured as articulated shafts with in each case one joint (6) close to the wheel and one joint (7) remote from the wheel, and the said joints (6, 7) in each case having at least one rotational axis which is of identical orientation in all joints (6, 7), **characterized in that** the drive unit (5) is configured to transmit a torque which is generated by electric motor to the drive shafts (2, 4) and has a vehicle body suspension means which permits a rotation of the drive unit (5) with regard to the vehicle body about a pivoting axis which is parallel to the rotational axes of identical orientation.

2. Drive train according to Claim 1, the drive unit (5) comprising a first electric machine (8) for driving the left-hand drive shaft (2) and a second electric machine (9) for driving the right-hand drive shaft (4).

3. Drive train according to Claim 2, the first and second electric machine (8, 9) having rotor shafts (14, 15) which are directed coaxially with respect to the drive shafts (2, 4) when the vehicle is driving straight ahead.

4. Drive train according to Claim 2, the drive unit (5) having
• a first connecting gear mechanism (12) for drive connecting a first rotor shaft (14) of the first electric machine (8) to the left-hand drive shaft (2), and
• a second connecting gear mechanism (13) for drive connecting a second rotor shaft (15) of the second electric machine (9) to the right-hand drive shaft (4),
the first and the second connecting gear mechanism (12, 13) being arranged in a common housing, and the first electric machine (8) being attached to the housing on the side which faces the left-hand wheel (1), and the second electric machine (9) being attached to the housing on the side which faces the right-hand wheel (3).

5. Drive train according to Claim 1, the drive unit (5) having a central electric machine (10) with a rotor shaft (16) for driving both drive shafts (2, 4), and a differential (11).

6. Drive train according to Claim 5, the rotor shaft (16) of the central electric machine (10) being directed coaxially with respect to the drive shafts (2, 4) when the vehicle is driving straight ahead.

7. Drive train according to Claim 5, the rotor shaft (16) being oriented in the driving direction when driving straight ahead, and the central electric machine (10) being arranged in front of or behind the differential (11) as viewed in the driving direction, which differential (11) is arranged between the left-hand and right-hand drive shaft (2, 4).

8. Motor vehicle having a drive train according to one of Claims 1 to 7.

9. Motor vehicle according to Claim 8 having an internal combustion engine for driving the non-steered axle.

## Revendications

1. Unité d'entraînement pour un véhicule, la chaîne cinématique comportant :
- un arbre d'entraînement (2) gauche relié fixement en entraînement à une roue (1) orientable à gauche ;
- un arbre d'entraînement (4) droit relié fixement en entraînement à une roue (3) orientable à droite ; et
- une unité d'entraînement (5) disposée entre les arbres d'entraînement (2, 4) pour entraîner les arbres d'entraînement (2, 4) ;
les arbres d'entraînement (2, 4) étant réalisés sous la forme d'arbres articulés avec respectivement une articulation (6) proche de la roue et une articulation (7) éloignée de la roue et lesdites articulations (6, 7) comportant respectivement au moins un axe de rotation de même orientation pour toutes les articulations (6, 7) ;
**caractérisée en ce que** l'unité d'entraînement (5) est réalisée pour transmettre un couple de rotation produit à l'aide d'un moteur électrique aux arbres d'entraînement (2, 4) et comporte une suspension de carrosserie permettant une rotation de l'unité d'entraînement (5) par rapport à la carrosserie autour d'un axe de rotation parallèle aux axes de rotation de même orientation.

2. Chaîne cinématique selon la revendication 1, l'unité d'entraînement (5) comprenant une première machine électrique (8) pour entraîner l'arbre d'entraînement (2) gauche et une deuxième machine électrique (9) pour entraîner l'arbre d'entraînement (4) droit.

3. Chaîne cinématique selon la revendication 2, la première et deuxième machine électrique (8, 9) comportant des arbres de rotor (14, 15) orientés, en cas de translation en ligne du véhicule, dans le plan coaxial par rapport aux arbres d'entraînement (2, 4).

4. Chaîne cinématique selon la revendication 2, l'unité d'entraînement (5) comportant :
- un premier engrenage de liaison (12) pour relier cinématiquement un premier arbre de rotor (14) de la première machine électrique (8) à l'arbre d'entraînement (2) gauche ; et
- un deuxième engrenage de liaison (13) pour relier cinématiquement un deuxième arbre de rotor (15) de la deuxième machine électrique (9) à l'arbre d'entraînement (4) droit ;
le premier et le deuxième engrenage de liaison (12, 13) étant disposés dans un carter commun et la première machine électrique (8) étant placée au niveau du côté orienté vers la roue (1) au niveau du carter et la deuxième machine électrique (9) étant placée au niveau du côté orienté vers la roue (3) droite au niveau du carter.

5. Chaîne cinématique selon la revendication 1, l'unité d'entraînement (5) comportant une machine électrique (10) centrale avec un arbre de rotor (16) pour entraîner les deux arbres d'entraînement (2, 4) et un différentiel (11).

6. Chaîne cinématique selon la revendication 5, l'arbre de rotor (16) de la machine électrique (10) centrale étant orienté, en cas de translation en ligne du véhicule, dans le plan coaxial par rapport aux arbres d'entraînement (2, 4).

7. Chaîne cinématique selon la revendication 5, l'arbre de rotor (16) étant orienté, en situation de translation en ligne, dans la direction de conduite et la machine électrique (10) centrale étant disposée, dans la direction de conduite, devant ou derrière le différentiel (11) disposé entre l'arbre d'entraînement (2, 4) gauche et droit.

8. Véhicule automobile avec une chaîne cinématique selon une des revendications 1 à 7.

9. Véhicule automobile selon la revendication 8 avec un moteur à combustion interne permettant d'entraîner l'essieu non articulé.
